(19)

Europäisches
Patentamt
European
Patent Office
Office européen
des brevets

(11) **EP 1 815 742 A1**

(12) **EUROPEAN PATENT APPLICATION**
published in accordance with Art. 158(3) EPC

(43) Date of publication:
**08.08.2007 Bulletin 2007/32**

(21) Application number: **05800548.9**

(22) Date of filing: **02.11.2005**

(51) Int Cl.:
**A01N 63/00** (2006.01)     **A01G 7/00** (2006.01)

(86) International application number:
**PCT/JP2005/020196**

(87) International publication number:
**WO 2006/049201 (11.05.2006 Gazette 2006/19)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **02.11.2004 JP 2004319491
27.05.2005 JP 2005156015
30.09.2005 JP 2005288926**

(71) Applicant: **Asahi Breweries, Ltd.
Tokyo 104-8323 (JP)**

(72) Inventors:
• **KITAGAWA, Takanori,
Asahi Breweries Ltd.
Moriya-shi, Ibaraki,
302-0106 (JP)**
• **IIJIMA, Noboru,
Asahi Breweries Ltd.
Miriya-shi, Ibaraki,
302-0106 (JP)**

• **AKATORI, Shigeki,
Yeast Bus. Co, ASAHI F & H LTD.
Tokyo 130-0001 (JP)**
• **SHIRAI, Takeshi,
Asahi Breweries, Ltd.
Moriya-shi, Ibaraki 302-0106 (JP)**
• **TSUCHIYA, Satoko,
Asahi Breweries Ltd.
Moriya-shi, Ibaraki 302-0106 (JP)**
• **MINAMI, Taichi,
Asahi Breweries Ltd.
Moriya-shi, Ibaraki 302-0106 (JP)**

(74) Representative: **Eisenführ, Speiser & Partner
Patentanwälte Rechtsanwälte
Postfach 10 60 78
28060 Bremen (DE)**

(54) **AGENT FOR ELEVATING PLANT DISEASE-RESISTANE AND METHOD OF PRODUCING THE SAME**

(57) It is intended to provide an agent for elevating resistance against plant diseases whereby the resistance against plant diseases and pest insects are elevated by using a yeast-origin component, the safety of which has been established as a food, so that it is expected to strength a plant, enable the raising of good seedlings and, in its turn, enable the production of a crop with favorable qualities at a high yield. Namely, an agent for elevating plant disease-resistance which contains a yeast cell wall digestion product is provided. Also, a controlling material for a specific use which contains a yeast cell wall digestion product and is usable for imparting plant disease-resistance is provided. Moreover, use of a yeast cell wall digestion product for elevating plant disease-resistance is provided. Further, a method of elevating the effect of elevating plant disease-resistance of a plant activator by adding a yeast cell wall digestion product to the plant activator is provided. Furthermore, a cultivation method which comprises supplying the above-described agent for elevating plant disease-resistance to young seedlings and/or seedlings after setting is provided.

EP 1 815 742 A1

**Description**

**Technical Field**

The present invention relates to a plant's disease resistance-improving agent which is administered to seeds, roots, stems, leaf surface or fruits of plants in the form of a solution thereof or in its solid state according to the techniques such as the spraying of the same on the leaf surface or on the soil, the watering or irrigation of the same on the soil, or the drenching of the soil therewith, or a method in which the agent is added to a culture medium used for, for instance, hydroponic cultivation.

**Background Art**

There have been known plants' diseases such as those caused by viruses, bacteria or filamentous fungi (mould). Typical examples thereof include those caused by viruses such as mosaic; those caused by bacteria such as bacterial spot, and bacterial soft rot; and tar disease (soft rot) caused by bacteria belonging to the genus Pseudomonas. In addition, there have likewise been known, as filamentous fungi (mould) serving as a causal microorganisms for plants' diseases, for instance, those belonging to the genus Corticium causing, for instance, southern blight observed for a variety of plants; those belonging to the genus Rhizoctonia causing, for instance, damping-off and sheath blight; those belonging to the genus Fusarium causing, for instance, stem rot and wilt; those belonging to the genus Mycovellosiella causing, for instance, leaf spot of, for instance, eggplant; those belonging to the genus Cercospora serving as a causal fungus for leaf spot of, for instance, tomato plants; those belonging to the genus Helminthosporium serving as a causal fungus for, for instance, southern leaf blight (Helminthosporium leaf spot) observed for, for instance, rice plants; those belonging to the genus Pyricularia causing, for instance, blast of, for instance, rice plants; those belonging to the genus Stemphylium causing, for instance, white spot of, for instance, red pepper and green pepper plants; those belonging to the genus Alternaria causing, for instance, black rot observed for a variety of plants; those belonging to the genus Cladosporium causing leaf mold of, for instance, tomato plants; those belonging to the genus Verticillium causing, for instance, verticillium wilt; those belonging to the genus Oidium and Oidipsis causing powdery mildew; those belonging to the genus Monilinia causing, for instance, brown rot observed for a variety of fruit trees; those belonging to the genus Botrytis causing gray mold of a variety of plants; those belonging to the genus Phyllosticta (Ascochyta) causing, for instance, black rot of burdock plants; those belonging to the genus Septoria causing early blight of celery; those belonging to the genus Ascochyta causing gummy stem blight of, for instance, cucumber plants; those belonging to the genus Colletotrichum, Gloeosporium causing anthracnose; those belonging to the genus Phomopsis causing, for instance, brown spot of egg plant and black rot of burdock plants; those belonging to the genus Phoma causing, for instance, stem blight of asparagus plants; those belonging to the genus Rhizopus causing, for instance, bacterial wilt of rice plants and bacterial soft rot of strawberry plants; and those belonging to the genus Pythium causing bacterial wilt of a variety of plants; as well as rust fungi; sclerotium-forming microorganisms; and powdery mildew-forming microorganisms. In addition, there have likewise been known other fungi such as those belonging to the genus Rhizoctonia causing brown patch and large patch of lawn grass in the lawn-planted areas or fields such as golf links or soccer links; and those belonging to the genus Pythium causing pythium diseases.

In particular, fungi belonging to the genus Fusarium are causal fungi for diseases of a wide variety of plants and such plants' diseases include, for instance, scab of wheat, Fusarium wilt of tomato, Fusarium crown and root rot of tomato, Fusarium wilt of strawberry, Fusarium wilt of burdock, yellows of cabbages and cauliflowers, Fusarium wilt of cucumber, Fusarium wilt of eggplant, Fusarium wilt (stem rot) of melon, Fusarium wilt (stem rot) of watermelon, blown rot of yarns, Fusarium wilt of spinach, and damping-off of maize.

In respect of the agricultural production, it would be an important subject to ensure healthy growth of farm products. Accordingly, there have been used various kinds of fertilizers and manures and agricultural chemicals for the purpose of improving the resistance of plants against the diseases listed above and for the purpose of accelerating the growth thereof. However, the agents prepared according to chemical syntheses such as agricultural chemicals are not only toxic to injurious living things, but also quite liable to adversely affect living things other than those injurious ones. In particular, when using inorganic compounds, it has been necessary to closely control, for instance, the amount thereof to be used while taking into consideration the effects thereof on the human bodies, on the plants per se or the fruits of the plants. Regarding, in particular, the agents for the acceleration of the growth of plants used as edible materials, the cultivation thereof without using any agricultural chemical has been able to be found here and there recently, while taking into consideration such a fact that some agricultural chemicals must be used for the cultivation of such edible plants, but they are, for instance, toxic or injurious thereto. In addition, if such plants or the agricultural farming lands are once sprayed with the foregoing agents, the latter would remain within the soil over a long period of time and problems correspondingly arise such that this would lead to the occurrence of any environmental pollution or environmental disruption. For this reason, there has been desired for the development of a substance which can improve the disease resistance of plants and accelerate the growth thereof without being accompanied by problems of any environmental pollution or environmental disruption.

Under such circumstances, there has been proposed a method (see, for instance, Patent Document 1 specified below) which comprises increasing the mass of plants' bodies (above-ground parts and roots) and forming strong plants' bodies by the use of salicylic acid or a derivative thereof. Moreover, there has also been proposed a technique in which a mixture comprising a sulfur-containing amino acid and D-glucose is administered to plants to promote the formation of phytoalexin as an antibacterial substance of the plants in themselves and to thus improve the disease resistance thereof (see, for instance, Patent Document 2 specified below). These chemical substances may hardly involve a risk of causing any environmental pollution unlike the foregoing agricultural chemicals, but they may have some effects on the animals' and plants' bodies.

On the other hand, there have politically been approved recently the use of components derived from naturally occurring substances, which possess functions or botanical physiological functions of controlling diseases and pests as well as weeds as specified protection materials. These "specified protection materials" are also referred to as "specified agricultural chemicals" and accordingly, they are agricultural materials specified on the basis of the regulations for the control of agricultural chemicals. The specified protection materials (specified agricultural chemicals) should be materials whose safety for agricultural crops or the like, human beings and domestic animals as well as fisheries animals and plants have been confirmed while taking into consideration the raw materials thereof and accordingly, they should satisfy the following requirements: (1) it has been proved that they certainly have effects of controlling diseases and pests as well as weeds or effects of enhancing or controlling the physiological functions of agricultural crops; and (2) it has been proved that they are safe for agricultural crops, men and live stock as well as fisheries animals and plants.

Patent Document 1: Japanese Un-Examined Patent Publication 2003-95821;
Patent Document 2: Japanese Un-Examined Patent Publication 2000-95609.

## Disclosure of the Invention

### Problems That the Invention is to Solve

Accordingly, it is an object of the present invention to provide a plant's disease resistance-improving agent which can be prepared using yeast-derived components whose safety as a food has already been established, which can improve the plant's resistance to various diseases and/or injurious insects to thus strengthen the plant's body and to thus grow healthy and strengthened seedlings and which can allow the cultivation of high quality plant products in a high productivity.

### Means for Solving the Problems

The inventors of this invention have conducted various studies to achieve the foregoing objects, have found that the plant's disease resistance can be improved by the application of a plant's disease resistance-improving agent which is obtained by the decomposition of the cell walls of yeast using, for instance, enzymes including glucanase onto the young seedlings and/or seedlings after the seedlings are planted a field, and have thus completed the present invention.

More specifically, the present invention herein provides a plant's disease resistance-improving agent which comprises yeast cell wall-decomposition products.

Moreover, the present invention herein provides a specified protection material used for imparting disease-resistant characteristics to plants, which comprises yeast cell wall-decomposition products.

In addition, the present invention further provides the use of the yeast cell wall-decomposition products for the improvement of the disease-resistant characteristics of plants.

Furthermore, the present invention also provides a method for enhancing the effect of a plant's activator to improve plant's disease resistance wherein yeast cell wall-decomposition products are incorporated into the plant's activator.

Further, the present invention likewise provides a method for cultivating a plant comprising the step of applying the foregoing plant's disease resistance-improving agent to the young seedlings and/or seedlings after the seedlings are planted.

In this specification, the term "plant" means all of the things capable of being deduced from the word "plant" per se such as cereals, seeds, bulbs, flowering plants, vegetables, fruits, fruit trees, fragrant weeds (herbs), unicellular organisms which possess photosynthetic activities, and taxonomical plants.

**Effects of the Invention**

The present invention would be able to provide a plant's disease resistance-improving agent which can improve the plant's resistance to various diseases and/or injurious insects to thus make healthy and strengthened seedlings grow and which can allow the cultivation of high quality plant products in a high productivity.

**Best Mode for Carrying Out the Invention**

The plant's disease resistance-improving agent according to the present invention comprises yeast cell wall-decomposition products.

The yeast cell wall-decomposition products can be prepared by, for instance, treating the cell walls thereof with an enzyme preparation containing glucanase. In this respect, the yeast cell walls usable herein may be the yeast bodies per se; cell walls prepared according to various methods such as the self-digestive method (the yeast cell bodies are solubilized while making use of, for instance, the protease included in the yeast cell body in itself), the enzyme-decomposition method (a method for solubilizing the yeast cell bodies by the addition of an enzyme- containing pharmaceutical preparation derived from microorganisms or plants), the hot water-extraction method (a method comprising the step of immersing the yeast cell bodies in hot water over a predetermined time period to thus solubilized the cell walls), the acid or alkali-decomposition method (a method comprising the step of adding a variety of acids or alkalis to an appropriate dispersion or solution containing the yeast cell bodies to thus solubilized the same), the physical pulverization method (such as those comprising the step of the pulverization of the yeast cell bodies according to the application of ultrasonic waves, the high pressure homogenization, or the steps of mixing them with solid materials such as glass beads and milling or grinding the same together with the glass beads), and the freeze-melting method (a method for pulverization of the yeast cell bodies comprising the step of repeating, at least once, the cycle consisting of the steps of freezing yeast cell bodies and thawing the same; and the yeast cell walls usable herein may likewise be the residues remaining after the removal of the yeast extract from the yeast cell bodies.

The yeasts used in the present invention are not limited to specific ones insofar as they may be referred to as the yeasts from the taxonomical standpoint or from the viewpoint of industrial usage and specific examples thereof include brewer's yeasts, baker's yeasts, sake yeasts, whiskey yeasts, shochu yeasts, and other yeasts used for the fermentation of alcohols.

The enzymes used for the decomposition of the yeast cell walls may be, for instance, those industrially employed such as glucanase, $\alpha$-amylase, $\beta$-amylase, glucoamylase, pullulanase, transglycosidase, dextranase, glucose isomerase, cellulase, naringinase, hesperidinase, xylanase, hemicellulase, mannanase, pectinase, invertase, lactase, chitinase, lysozyme, inulinase, chitosanase, $\alpha$-galactosidase, protease, papain, peptidase, amino-peptidase, lipase, phospholipase, phytase, acidic phosphatase, phosphodiesterase, catalase, glucose oxidase, peroxidase, tannase, polyphenol oxidase, deaminase, and nuclease. For instance, any enzyme preparation containing glucanase can be used in the invention. For instance, usable herein as such enzymes also include commercially available TUNIKASE (available from DAIWA Chemical Industries, Ltd.) and YL-NL and YL-15 (both available from AMANO Enzyme Co., Ltd.). The amount of the enzyme used for the decomposition of yeast cell walls in general ranges from 0.00001 to 10000% by mass, preferably 0.01 to 10% by mass and more preferably 0.1 to 2% by mass on the basis of the mass of the dried yeast cell walls used.

One of ordinary skill in the art can appropriately determine the conditions used for the decomposition of the yeast cell walls with the foregoing enzymes, while taking notice of such factors as the kind of each particular enzyme selected and the amount of each particular enzyme to be added.

On the other hand, the yeast cell walls can likewise be decomposed, in addition to the foregoing enzyme decomposition method, by a method for the decomposition of the same in a high pressure homogenizer maintained at a pressure on the order of 50 MPa; a method comprising the step of extracting with hot water; or a method comprising inoculating a bacterium capable of decomposing the yeast cell walls (such as Pseudomonas paucimobilis, Arthrobacter luteus) to thus give a desired yeast cell wall-decomposition products.

The plants can be improved in its resistance to various diseases and/or injurious insects by the application of the foregoing yeast cell wall-decomposition products onto the young seedlings and/or the seedlings after the seedlings are planted a field. More specifically, the foregoing yeast cell wall- decomposition products would permit the improvement of the resistance of plants against diseases caused by viruses such as mosaic, those caused by bacteria such as bacterial spot, and bacterial soft rot; and tar diseases (soft rot) caused by bacteria belonging to the genus Pseudomonas. In addition, the decomposition product would permit the improvement of the resistance of plants against diseases, for instance, those caused by filamentous fungi (mould) serving as a causal microorganisms for plants' diseases such as southern blight observed for a variety of plants caused by the fungi belonging to the genus Corticium; damping-off and sheath blight caused by fungi belonging to the genus Rhizoctonia; stem rot and wilt caused by the fungi belonging to the genus Fusarium; leaf spot of, for instance, eggplant caused by the fungi belonging to the genus Mycovellosiella; leaf spot of, for instance, tomato plants caused by the fungi belonging to the genus Cercospora; southern leaf blight (Helminthosporium leaf spot) observed for, for instance, rice plant caused by the fungi belonging to the genus Helminthosporium; blast of, for instance, rice plant caused by the fungi belonging to the genus Pyricularia; white spot of, for instance, red pepper and green pepper plants caused by the fungi belonging to the genus Stemphylium; black rot observed for a variety of plants caused by the fungi belonging to the genus Alternaria; leaf mold of, for instance, tomato plants caused by the fungi belonging to the genus Cladosporium; verticillium wilt caused by the fungi belonging to the genus Verticillium; powdery mildew caused by the fungi belonging to the genus Oidium, Oidipsis; brown rot observed for a variety of fruit trees caused by the fungi belonging to the genus Monilinia; gray mold of a variety of plants caused by the fungi belonging to the genus Botrytis; black rot of burdock plants caused by the fungi belonging to the genus Phyllosticta (Ascochyta); early blight of celery plants caused by the fungi belonging to the genus Septoria; gummy stem blight of, for instance, cucumber plants caused by the fungi belonging to the genus Ascochyta; anthracnose caused by the fungi belonging to the genus Colletotrichum, Gloeosporium; brown spot of eggplant and black rot of burdock plants caused by the fungi belonging to the genus Phomopsis; stem blight of asparagus caused by the fungi belonging to the genus Phoma; bacterial wilt of rice plant and bacterial soft rot of strawberry plants caused by the fungi belonging to the genus Rhizopus; and bacterial wilt of a variety of plants caused by the fungi belonging to the genus Pythium; as well as those originated from rust fungi, sclerotium-forming microorganisms, and powdery mildew-forming microorganisms.

In particular, the foregoing yeast cell wall-decomposition products are quite effective for the improvement of the plant's resistance to those caused by bacteria such as bacterial spot, and bacterial soft rot; tar diseases (soft rot) caused by bacteria belonging to the genus Pseudomonas; and stem rot and wilt caused by the fungi belonging to the genus Fusarium.

The foregoing yeast cell wall-decomposition products may be used alone or in any combination with agricultural chemicals, fertilizers and manures and/or culture mediums for horticulture.

Moreover, the plant's disease resistance-improving agent of the present invention may be put on the market in any form such as liquid, powdery, and granular forms. When spraying the plants with the disease resistance-improving agent, the foregoing product may directly be sprayed onto desired plants or the soil of farmland, or it may likewise be sprayed after diluting the same with, for instance, water to an appropriate concentration. Moreover, the method of spraying the disease resistance-improving agent of the invention is not likewise limited to any specific one and specific examples thereof include a method in which the disease resistance-improving agent is directly sprayed on the seeds, leaves, and stems of each specific plant; and a method which comprises spraying the agent on the culture mediums or incorporating the same into soil. In this connection, when the agent is incorporated into fertilizers and manures, such fertilizers and manures are not limited to ones of particular kinds and specific examples thereof include chemical fertilizers such as nitrogen component-containing, phosphate component-containing and/or potassium component-containing ones; and organic fertilizers such as oil cakes, fish meal, bone meal, powdery seaweeds, amino acids, saccharides and/or vitamins.

The plant's disease resistance-improving agent of the present invention may further comprise other components such as a water-soluble solvent and/or a surfactant in amounts which never adversely affect the desired effect of the yeast cell wall decomposition product to improve the resistance to diseases and injurious insects.

Examples of such water-soluble solvents are divalent alcohols such as ethylene glycol, diethylene glycol, polyethylene glycol; and trivalent alcohols such as glycerin.

The surfactants usable herein may be those soluble in water such as nonionic surfactants, cationic surfactants, amphoteric surfactants and anionic surfactants.

Specific examples of nonionic surfactants include sorbitan fatty acid esters, polyoxyalkylene sorbitan fatty acid esters, polyoxyalkylene fatty acid esters, glycerin fatty acid esters, polyoxyalkylene glycerin fatty acid esters, polyglycerin fatty acid esters, polyoxyalkylene polyglycerin fatty acid esters, sucrose fatty acid esters, resin acid esters, polyoxyalkylene resin acid esters, polyoxyalkylene alkyl ethers, polyoxyalkylene alkylphenyl ethers, alkyl (poly)glycosides, and polyoxyalkylene alkyl (poly)glycosides. Preferably used herein include nitrogen-free ether group-containing nonionic surfactants, and ester group-containing nonionic surfactants. Particularly preferably used herein are, for instance, oxyalkylene group-containing and ester group-containing nonionic surfactants such as polyoxyalkylene sorbitan fatty acid esters, polyoxyalkylene fatty acid esters, polyoxyalkylene glycerin fatty acid esters and polyoxyalkylene polyglycerin fatty acid esters; and sugar skeleton-containing, nitrogen atom-free and ether group-containing nonionic surfactants such as alkyl (poly)glycosides.

The anionic surfactants may be, for instance, carboxylic acid type, sulfonic acid type, sulfuric acid ester type and phosphoric acid ester type anionic surfactants. Preferably used herein include, for instance, are carboxylic acid type ones and phosphoric acid ester type ones. Specific examples of those derived from carboxylic acids are fatty acids each having 6 to 30 carbon atoms and salts thereof, polyvalent carboxylic acid salts, carboxylic acid salts of polyoxyalkylene alkyl ethers, carboxylic acid salts of polyoxyalkylene alkylamide ethers, resin acid salts, dimer acid salts, polymeric acid salts and tall oil fatty acid salts. Specific examples of those derived from sulfonic acids are alkylbenzene sulfonic acid salts, alkylsulfonic acid salts, alkylnaphthalene sulfonic acid salts, naphthalene sulfonic acid salts, diphenyl ether sulfonic acid salts, salts of condensates of alkylnaphthalene sulfonic acid, and salts of condensates of naphthalene sulfonic acids. Specific examples of sulfuric acid ester type surfactants are salts of alkylsulfuric acid esters, salts of polyoxyalkylene alkylsulfuric acid esters, salts of polyoxyalkylene alkylphenyl ether sulfuric acid esters, salts of tri-styrene phenol sulfuric acid esters, salts of polyoxyalkylene di-styrene phenol sulfuric acid esters, and salts of alkyl polyglycoside sulfate. Specific examples of phosphoric acid ester type anionic surfactants are alkyl phosphoric acid ester salts, alkylphenyl phosphoric acid ester salts, polyoxyalkylene alkyl phosphoric acid ester salts, and polyoxyalkylene alkylphenyl phosphoric acid ester salts. Examples of the foregoing salts are metal salts (such as Na, K, Ca, Mg and Zn salts), ammonium salts, alkanol-amine salts and aliphatic amine salts.

The amphoteric surfactants may be, for instance, amino acid type, betaine type, imidazoline type and amine oxide type ones. Specific examples of such amino acid type ones are acyl amino acid salts, salts of acyl sarcosine, acyloyl methyl amino-propionates, alkyl amino-propionates, and acylamide ethyl hydroxyethyl methyl carboxylic acid salts. Specific examples of the betaine type amphoteric surfactants are alkyl dimethyl betaines, alkyl hydroxyethyl betaines, acylamide propyl hydroxypropyl ammonia sulfo-betaines, acylamide propyl hydroxypropyl ammonia sulfo-betaines, and ricinoleic acid amidopropyl dimethyl- carboxymethyl ammonia betaines. Specific examples of the imidazoline type amphoteric surfactants are alkyl-carboxymethyl hydroxyethyl imidazolinium betaines and alkyl-ethoxy carboxymethyl imidazolinium betaines. Specific examples of the amine oxide type amphoteric surfactants include alkyl dimethyl- amine oxides, alkyl diethanol-amine oxides, and alkyl amidopropyl amine oxides.

The surfactants listed above may be used alone or in any combination of at least two of them.

The plant's disease resistance-improving agent of the present invention may likewise comprise, for instance, at least one substance having an eliciter activity selected from the group consisting of peptides, polysaccharides, glycoproteins and lipids, as a drug for imparting the plant's disease resistance to a desired plant. The term "eliciter activity" used herein means a function of inducing the ability of a plant to synthesize an antibacterial substance such as phytoalexin within the plant's body.

As substances each having such an eliciter activity, there have been known, for instance, a variety of substances peculiar to respective plants and accordingly, one can appropriately select such substances depending on the kind of each particular plant. Specific examples of such substances include exogenous eliciters such as glucan oligosaccharides, chitin oligosaccharides, chitosan oligosaccharides, hepta- $\beta$ -glucoside, systemin, and chymotrypsin-decomposition products of casein protein; endogenous eliciters such as oligo-galacturonic acid, hexose, uronic acid, pentose, and deoxy-hexose; other substances such as sucrose esters, carboxymethyl cellulose (CMC), carrageenan, decomposition products of hyphae derived from fungi, and extracts of seaweeds. Preferably used herein are those which are soluble in water and which can ensure the stable supply thereof.

Furthermore, a plant's growth regulator may be incorporated into the plant's disease resistance-improving agent of the present invention. Specific examples of such plant's growth regulators include auxin-antagonists such as maleic acid hydrazide-containing preparations and uniconazole-containing agent; auxin- containing preparations such as indole butyrate agent, 1-naphthyl acetamide- containing preparations, and 4-CPA-containing preparations; cytokinin preparations such as forchlorfenuron-containing preparations; gibberellin preparations such as gibberellin-containing preparations; other growth retardants such as daminogytto preparations; transpiration regulators such as paraffin-containing preparations; other plant's growth regulators such as choline-containing preparations; plant's growth regulators derived from biological origins such as chlorella extract-containing preparations; and ethylene preparations such as ethephon-containing preparations.

The plant's disease resistance-improving agent of the present invention preferably comprises the yeast cell wall-decomposition products in an amount ranging from 0.00001 to 30% by mass and in particular, 0.001 to 0.1% by mass as expressed in terms of the mass of the decomposition products in their dried condition. In addition, the composition of the present invention is preferably applied onto the plants or the farmland on which the plants are cultivated in an amount ranging from 10 to 800 g per 10 ares of farmland and more preferably 50 to 250 g per 10 ares of farmland as expressed in terms of the mass of the yeast cell wall- decomposition products in their dried condition. A more excellent plant's disease resistance can be ensured by the use of the composition of the present invention in an amount specified above.

Examples

(Preparation of Yeast Cell Wall-Containing Solution)

A yeast cell-containing solution (1.5 L) having a concentration of 15% by mass (as expressed in terms of the mass of the yeast cell wall-decomposition products in the dried condition) was prepared according to the enzyme-decomposition technique using yeast cells recovered after brewing beer, as a raw material, followed by the removal of the supernatant through the centrifugation of the yeast cell wall- containing solution to thus give 1000 g of a yeast cell wall-containing slurry. To the resulting slurry, there was added 500 g of water, followed by the control of the pH value of the mixture to 5.5, the addition of YL-15 (available from AMANO Enzyme Co., Ltd.) in an amount of 0.5% on the basis of the mass of the dried solid contents to thus make them react with one another at 55°C for 18 hours, and the treatment of the reaction system at 80°C for 10 minutes to thus give 1500 g of a yeast cell wall-containing liquid.

(Example 1)

To a pot for the raising of seedling, there were planted the seeds of lettuce and the young seedlings immediately after the germination thereof were immersed in tap water to thus infiltrate the latter into the young seedlings. After 2 weeks, the seedlings were infiltrated with tap water and then planted on a field. After the seedlings were planted, the yeast cell wall-containing liquid whose dried solid content had been adjusted to 250 ppm was sprayed on the surface of the leaves of the seedlings three times at intervals of 2 weeks. 2 months after the seedlings were planted, 60 heads or roots of lettuce were randomly selected and inspected for the rates of outbreak of the bacterial soft rot, tar disease and bacterial spot.

(Example 2)

To a pot, there were planted the seeds of lettuce and the young seedlings immediately after the germination thereof were immersed in the foregoing yeast cell wall-containing liquid whose dried solid content had been adjusted to 250 ppm to thus infiltrate the latter into the young seedlings. After 2 weeks, the seedlings were again infiltrated with the yeast cell wall-containing liquid whose dried solid content had been adjusted to 250 ppm and then planted on a field. 2 months after the seedlings were planted, 60 heads of lettuce were randomly selected and inspected for the rates of outbreak of the bacterial soft rot, tar disease and bacterial spot.

(Example 3)

To a pot for the raising of seedling, there were planted the seeds of lettuce and the young seedlings immediately after the germination thereof were immersed in the foregoing yeast cell wall-containing liquid whose dried solid content had been adjusted to 250 ppm to thus infiltrate the latter into the young seedlings. After 2 weeks, the seedlings were again infiltrated with the yeast cell wall-containing liquid whose dried solid content had been adjusted to 250 ppm and then planted on a field. After the seedlings were planted, the yeast cell wall-containing liquid whose dried solid content had been adjusted to 250 ppm was sprayed on the surface of the leaves of the seedlings three times at intervals of 2 weeks. 2 months after the seedlings were planted, 60 heads of lettuce were randomly selected and inspected for the rates of outbreak of the bacterial soft rot, tar disease and bacterial spot.

(Comparative Example 1)

To a pot for the raising of seedling, there were planted the seeds of lettuce and the young seedlings immediately after the germination thereof were immersed in tap water to thus infiltrate the latter into the young seedlings. After 2 weeks, the seedlings were infiltrated with tap water and then fix-planted on a field. 2 months after the seedlings were planted, 60 heads of lettuce were randomly selected and inspected for the rates of outbreak of the bacterial soft rot, tar disease and bacterial spot.

[Table 1]

**Table 1: Rate of Outbreak of Respective Diseases**

| Ex. No. | Bacterial Soft Rot | Tar Disease | Bacterial spot |
|---------|--------------------|-------------|----------------|
| 1* | 18/60 (30%) | 5/42 (12%) | 29/42 (69%) |
| 1 | 13/60 (22%) | 8/47 (17%) | 23/47 (49%) |
| 2 | 9/60 (15%) | 1/51 (2%) | 14/51 (27%) |
| 3 | 6/60 (10%) | 3/54 (6%) | 5/54 (9%) |
| *: Comparative Example | | | |

(Results)

The following conclusions can clearly be deduced from the results shown in Table 1: The rates of the outbreak of bacterial soft rot, tar disease and bacterial spot were reduced by the application of the plant's disease resistance-improving agent of the present invention to the young seedlings as compared with the results observed for Comparative Example. Moreover, the rates of the outbreak of bacterial soft rot and bacterial spot were reduced by the application of the plant's disease resistance-improving agent of the present invention to the young seedlings after the seedlings were planted a field.

The plant's disease resistance-improving agent of the present invention can provide an excellent effect of strengthening plants. For instance, as shown in Examples, the agent can improve the resistance of plants against a variety of diseases and can thus provide strengthened plant bodies.

(Example 4)

To a pot for the raising of seedling, there were planted the seeds of tomato (Cultivar: Renascence) and the yeast cell wall-containing liquid whose dried solid content had been adjusted to 10 ppm was drenched into the young seedlings immediately after the germination thereof in an amount of 4 ml/root and then planted on a field. After the seedlings were planted, the yeast cell wall-containing liquid whose dried solid content had been adjusted to 100 ppm was sprayed on the surface of the leaves of the seedlings in an amount of 60 to 100 ml/head at an interval of one week. 3 months after the seedlings were planted, a head of tomato plant was randomly selected and inspected for the infection with fungi belonging to the genus Fusarium.

(Comparative Example 2)

To a pot for the raising of seedling, there were planted the seeds of tomato (Cultivar: Renascence) and the young seedlings immediately after the germination thereof were immersed in tap water to thus infiltrate the latter into the young seedlings and then planted on a field. 3 months after the seedlings were planted, a head of tomato plant was randomly selected and inspected for the infection with fungi belonging to the genus Fusarium.

(Method for the Examination of Tomato Plant Infected with Fungi Belonging to the Genus Fusarium)

The root and three sections of the stem extending from 5 to 10 cm, 20 to 25 cm, and 30 to 35 cm above the ground, respectively were horizontally cut out from each of the tomato plants (grown up to a stem length of about 70 cm) selected in Example 4 and Comparative Example 2. After each cut surface of these specimens was sterilized with a 0.5% aqueous sodium hypochlorite solution, each stem specimen was cut in such a manner that the vessel thereof was exposed and cultivated on the KOMADA culture medium (see Table 2 given below) as a synthetic culture medium for selecting the fungi belonging to the genus Fusarium, followed by the observation thereof after 3 days from the initiation of the cultivation.

[Table 2]

**Table 2: Composition of KOMADA Culture Medium**

| Basal Culture Medium | | Antibacterial Substance | |
|---|---|---|---|
| Component | Amt. | Component | Amt. |
| $K_2HPO_4$ | 1 g | PCNB (75% water-dispersible powder) | 1 g |
| KCl | 0.5 g | OXGOAL (Na cholic acid) | 1 g |
| $MgSO_4 \cdot H_2O$ | 0.5 g | $Na_2B_4O_7 \cdot 10H_2O$ | 1 g |
| Fe-EDTA | 0.01 g | Streptomycin sulfate | 300 mg |
| L-Asparagine | 2 g | | |
| D-Galactose | 20 g | | |
| Agar | 15 g | | |

(continued)

| Basal Culture Medium | | Antibacterial Substance | |
|---|---|---|---|
| Component | Amt. | Component | Amt. |
| Water | 1000 ml | | |

(Results)

When each specimen was cultivated on the KOMADA culture medium as a selection medium for the fungi belonging to the genus Fusarium, it was found that the specimens of Comparative Example 2 or the root and the sections of the stem up to the level of 35 cm above the ground, which had not been infiltrated with the yeast cell wall-containing liquid (or the leaves thereof had been sprayed with the same liquid) were all infected with the fungi belonging to the genus Fusarium. Contrary to this, among the specimens of Example 4, which had been infiltrated with the yeast cell wall-containing liquid, the infection with the fungi belonging to the genus Fusarium was observed on the specimens present near the fungus-growing soil, such as the root and the section of the stem extending from 5 to 10 cm above the ground, but the sections of the stem extending from 20 to 25 cm and 30 to 35 cm above the ground respectively were not infected or contaminated with the fungi at all. This clearly indicates that the yeast cell wall-decomposition products can clearly inhibit the invasion of the fungi belonging to the genus Fusarium.

[Table 3]

Table 3: Results Obtained in Inspection of Plant for Infection with Fungi Belonging to Genus Fusarium

| Site | Ex. 4 | Comp. Ex. 2 |
|---|---|---|
| Root | ++++ | +++++ |
| Stem Section Extending from 5 to 10 cm Above Ground | ++ | ++++ |
| Stem Section Extending from 20 to 25 cm Above Ground | + | +++ |
| Stem Section Extending from 30 to 35 cm Above Ground | + | ++ |

(Example 5)

To a pot for the raising of seedlings, there were planted the seeds of tomato (Cultivar: Renascence), followed by the raising of the seedlings, the drenching of the young seedlings with the foregoing yeast cell wall-containing liquid whose dried solid content had been adjusted to 10 ppm in an amount of 4 ml/root and the subsequent planting of the seedlings on a field. 4 months after the seedlings were planted, the tomato plants were inspected for the rate of outbreak of powdery mildew.

(Example 6)

To a pot for the raising of seedling, there were planted the seeds of tomato (Cultivar: Renascence), followed by the raising of the seedlings, followed by the raising of the seedlings, the drenching of the young seedlings with the foregoing yeast cell wall-containing liquid whose dried solid content had been adjusted to 10 ppm in an amount of 4 ml/ root and the subsequent planting of the seedlings on a field. After the seedlings were planted, the yeast cell wall-containing liquid whose dried solid content had been adjusted to 100 ppm was sprayed on the surface of the leaves of the seedlings in an amount of 60 to 100 ml/head at an interval of one week. 4 months after the seedlings were planted, the tomato plants were inspected for the rate of outbreak of powdery mildew.

(Comparative Example 3)

To a pot for the raising of seedling, there were planted the seeds of tomato (Cultivar: Renascence), followed by the raising of the seedlings, and the subsequent planting thereof on a field. 4 months after the seedlings were planted, the tomato plants were inspected for the rate of outbreak of powdery mildew.

(Judgment of Disease Symptom)

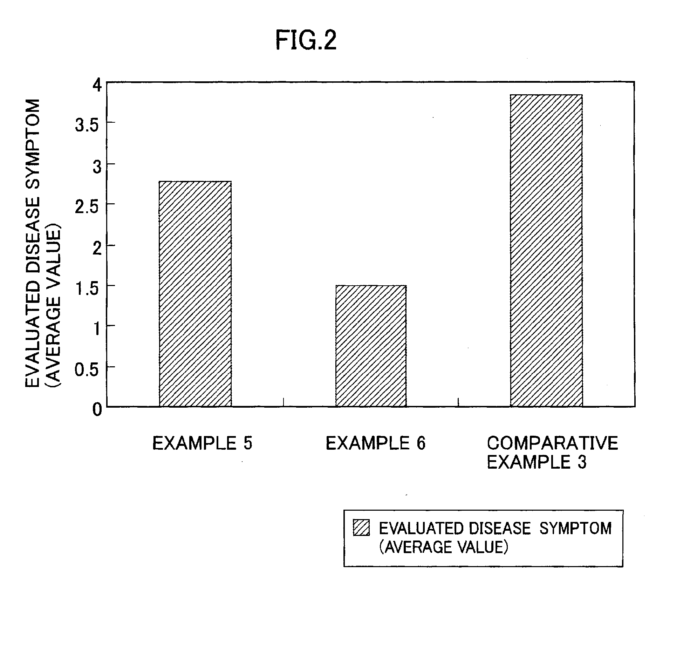

Eight heads each were randomly selected from the respective groups of the tomato plants raised in Example 5, Example 6 and Comparative Example 3 and the rate of outbreak of powdery mildew was evaluated for each head on the basis of the evaluation criteria detailed in the following Table 4. The results obtained in the evaluation are averaged and plotted on Fig. 2.

[Table 4]

**Table 4: Powdery Mildew-Evaluation Criteria**

| Score | Evaluation Criterion |
|---|---|
| 0 | There was not observed any disease symptom (neither lesion, nor burning up). |
| 1 (light) | There was not observed any burning up (but lesions were observed). |
| 2 (medium) | There were observed burning up of 1 to 4 leaves. |
| 3 (severe) | There were observed burning up of not less than 5 leaves. |
| 4 | The seedling was blighted. |

(Results)

The foregoing results clearly indicate that the outbreak of powdery mildew of tomato plants can be controlled by applying the yeast cell wall decomposition product to the tomato plant (the seedlings thereof) or by spraying the tomato plant with the decomposition product.

(Example 7)

To each 150 ml volume pot, there were planted 30 mg each of the seeds of bent grass (cultivar: Highland), and the resulting seedlings were cut every 3 to 4 days in such a manner that the seedlings of the bent grass had a height of 1 cm. After 7 days from the seeding, the seedlings of the bent grass were drenched with 20 ml each of the foregoing yeast cell wall-containing liquid whose dried solid content had been adjusted to 250 ppm at the roots of the bent grass seedlings. After 3 weeks from the germination thereof, the bent grass seedlings were inoculated with a pathogenic fungus of brown patch (Rhizoctonia solani AG2-2IIIB) cultivated on a 1.5% agar culture medium. After the inoculation of the pathogenic fungus, the seedlings were raised at 25°C and the rate of outbreak of the disease and the preventive value were calculated after 3 weeks.

(Comparative Example 4)

To each 150 ml volume pot, there were planted 30 mg each of the seeds of bent grass (cultivar: Highland), and the resulting seedlings were cut every 3 to 4 days in such a manner that the seedlings of the bent grass had a height of 1 cm. After 3 weeks from the germination, the bent grass seedlings were inoculated with a pathogenic fungus of brown patch (Rhizoctonia solani AG2-2IIIB) cultivated on a 1.5% agar culture medium. After the inoculation of the pathogenic fungus, the seedlings were raised at 25°C and the rate of outbreak of the disease and the preventive value were calculated after 3 weeks.

Five heads each were randomly selected from the respective groups of the bent grass seedlings raised in Example 7 and Comparative Example 4 and the severity of the disease was evaluated for each head on the basis of the evaluation criteria detailed in the following Table 5. The results thus obtained are shown in the following Table 6.

[Table 5]

**Table 5: Criteria for the Evaluation of Severity of Disease Caused by Pathogenic Fungi (Rhizoctonia solani)**

| Score | Evaluation Criteria |
|-------|---------------------|
| 0 | The plant was in a healthy condition. |
| 1 | The area damaged with the fungi or the disease was not more than 25% of the whole surface area of the pot. |
| 2 | The area damaged with the fungi or the disease ranged from 25 to 50% of the whole surface area of the pot. |
| 3 | The area damaged with the fungi or the disease ranged from 50 to 75% of the whole surface area of the pot. |
| 4 | The area damaged with the fungi or the disease was not more than 75% of the whole surface area of the pot. |

(Method for the Calculation of the Severity)

$$Severity = (0 \times A + 1 \times B + 2 \times C + 3 \times D + 4 \times E)/[\text{Number of Subject Examined } (A+B+C+D+E)]$$

(Method for the Calculation of the Preventive Value)

$$Preventive\ Value = \{(X \cdot Y)/X\} \times 100$$

(Wherein X represents the severity of disease observed for the specimen raised in Comparative Example 4, and Y represents that observed for the specimen raised in Example 7).

[Table 6]

**Table 6: Severity - Preventive Value**

|  | Severity | Preventive Value |
|--|----------|------------------|
| Example 7 (Y) | 0.6 | 70 |
| Comparative Example 4 (X) | 2 | - - |

The results shown in Table 6 indicate that the preventive value is calculated to be 70 and that the decomposition product shows a high preventive value. These severity values and preventive values make it clear that the application of the yeast cell wall-decomposition products can inhibit the outbreak of the disease of the lawn grass through the infection with Rhizoctonia solani.

(Example 8)

The seeds of cucumber (cultivar: Tokiwa Gibai (Trailer)) were planted on an agar culture medium (1.5%) and after 7 days, the seedlings of cucumber were inoculated with 100 μl each of the yeast cell wall-containing liquid whose dried solid content had been adjusted to 250 ppm at the roots of the seedlings. After 48 hours, the roots of these seedlings were put on an agar culture medium (diameter: 6 mm) supplemented with Rhizoctonia (Rhizoctonia solani AG4 HGII Mat7) and after 10 days, the seedlings were inspected for the outbreak of the disease due to this fungus.

(Comparative Example 5)

The seeds of cucumber (cultivar: Tokiwa Gibai (Trailer)) were planted on an agar culture medium (1.5%) and after 7 days, the seedlings of cucumber were inoculated with 100 μl each of distilled water at the roots of the seedlings. After 48 hours, the roots of these seedlings were put on an agar culture medium (diameter: 6 mm) supplemented with Rhizoctonia (Rhizoctonia solani AG4 HGII Mat7) and after 10 days, the seedlings were inspected for the outbreak of the disease due to this fungus.

Ten heads each were randomly selected from the respective groups of the cucumber seedlings raised in Example 8 and Comparative Example 5 to thus evaluate the rate of outbreak of the disease due to the fungus. When the hypocotyl site of each specimen was found to be blighted, the corresponding seedling was judged or defined to be attacked with the disease due to the fungus. The rate of outbreak of the disease was calculated on the basis of the rate of damaged heads relative to the total number of heads selected as specimens.

[Table 7]

**Table 7**

|  | Rate of Outbreak of Disease |
|---|---|
| Example 8 | 20% |
| Comparative Example 5 | 60% |

The results shown in Table 7 make it clear that the application of the yeast cell wall-decomposition products can inhibit the outbreak of the disease of the cucumber seedlings or plants through the infection with Rhizoctonia solani.

(Preparation of Baker's Yeast Cell Wall-Containing Liquid: Enzyme-Decomposition Technique)

A yeast cell-containing solution (1.5 L) having a concentration of 15% by mass (as expressed in terms of the mass of the yeast cell wall decomposition products in its dried condition) was prepared according to the enzyme-decomposition technique using baker's yeast cells, as a raw material, followed by the removal of the supernatant through the centrifugation of the yeast cell wall-containing solution to thus give 1000 g of a yeast cell wall-containing slurry. To the resulting slurry, there was added 500 g of water, followed by the control of the pH value of the mixture to 5.5, the addition of YL-15 (available from AMANO Enzyme Co., Ltd.) in an amount of 0.5% on the basis of the mass of the dried solid contents to thus make them react with one another at 55°C for 18 hours, and the treatment of the reaction system at 80°C for 10 minutes to thus give 1500 g of a yeast cell wall-containing liquid.

(Preparation of Baker's Yeast Cell Wall-Containing Liquid: Hot Water-Extraction Technique)

A yeast cell-containing solution (1.5 L) having a concentration of 15% by mass (as expressed in terms of the mass of the yeast cell wall decomposition products in its dried condition) was prepared according to the enzyme-decomposition technique using baker's yeast cells, as a raw material, followed by the removal of the supernatant through the centrifugation of the yeast cell wall-containing solution to thus give 1000 g of a yeast cell wall-containing slurry. To the resulting slurry, there was added 500 g of water to thus make them react with one another at 80°C for 18 hours to thus give 1500 g of a yeast cell wall-containing liquid.

(Preparation of Marine Yeast Cell Wall-Containing Liquid: Enzyme-Decomposition Technique)

A yeast cell-containing solution (1.5 L) having a concentration of 15% by mass (as expressed in terms of the mass of the yeast cell wall decomposition products in its dried condition) was prepared according to the enzyme-decomposition technique using marine yeast cells, as a raw material, followed by the removal of the supernatant through the centrifugation of the yeast cell wall-containing solution to thus give 1000 g of a yeast cell wall-containing slurry To the resulting slurry, there was added 500 g of water, followed by the control of the pH value of the mixture to 5.5, the addition ofYL-15 (available from AMANO Enzyme Co., Ltd.) in an amount of 0.5% on the basis of the mass of the dried solid contents to thus make them react with one another at 55°C for 18 hours, and the treatment of the reaction system at 80°C for 10 minutes to thus give 1500 g of a yeast cell wall-containing liquid.

(Example 9)

The seeds of tomato (cultivar: House Momotaro) were planted on an agar culture medium (1.5%) and after 7 days, the seedlings of tomato were inoculated with 100 µl each of the yeast cell wall-containing liquid whose dried solid content had been adjusted to 250 ppm at the roots of the seedlings. After 48 hours, the tissues of the roots of the tomato seedlings were put on a potato dextrose-agar culture medium (available from Difco Company) admixed with the spores ($10^5$/mL) of the fungus belonging to the genus Fusarium (Fusarium oxysporum f.sp.radicis-lycopersici) and after 5 days, the tissues of the seedlings were inspected for the growth of hyphae of this fungus.

(Example 10)

The seeds of tomato (cultivar: House Momotaro) were planted on an agar culture medium (1.5%) and after 7 days, the seedlings of tomato were inoculated with 100 µl each of the baker's yeast cell wall-containing liquid which had been prepared according to the enzyme-decomposition technique and whose dried solid content had been adjusted to 250 ppm at the roots of the tomato seedlings. After 48 hours, the tissues of the roots of the tomato seedlings were put on a potato dextrose-agar culture medium (available from Difco Company) admixed with the spores ($10^5$/mL) of the fungus belonging to the genus Fusarium (Fusarium oxysporum f.sp.radicis-lycopersici) and after 5 days, the tissues of the seedlings were inspected for the growth of hyphae of this fungus.

(Example 11)

The seeds of tomato (cultivar: House Momotaro) were planted on an agar culture medium (1.5%) and after 7 days, the seedlings of tomato were inoculated with 100 µl each of the baker's yeast cell wall-containing liquid which had been prepared according to the hot water-decomposition technique and whose dried solid content had been adjusted to 250 ppm at the roots of the tomato seedlings. After 48 hours, the tissues of the roots of the tomato seedlings were put on a potato dextrose-agar culture medium (available from Difco Company) admixed with the spores ($10^5$/mL) of the fungus belonging to the genus Fusarium (Fusarium oxysporum f.sp.radicis-lycopersici) and after 5 days, the tissues of the seedlings were inspected for the growth of hyphae of this fungus.

(Example 12)

The seeds of tomato (cultivar: House Momotaro) were planted on an agar culture medium (1.5%) and after 7 days, the seedlings of tomato were inoculated with 100 µl each of the marine yeast cell wall-containing liquid which had been prepared according to the enzyme-decomposition technique and whose dried solid content had been adjusted to 250 ppm at the roots of the tomato seedlings. After 48 hours, the tissues of the roots of the tomato seedlings were put on a potato dextrose-agar culture medium (available from Difco Company) admixed with the spores ($10^5$/mL) of the fungus belonging to the genus Fusarium (Fusarium oxysporum f.sp.radicis-lycopersici) and after 5 days, the tissues of the seedlings were inspected for the growth of hyphae of this fungus.

(Comparative Example 6)

The seeds of tomato (cultivar: House Momotaro) were planted on an agar culture medium (1.5%) and after 7 days, the seedlings of tomato were inoculated with 100 µl each of distilled water at the roots of the tomato seedlings. After 48 hours, the tissues of the roots of the tomato seedlings were put on a potato dextrose-agar culture medium (available from Difco Company) admixed with the spores ($10^5$/mL) of the fungus belonging to the genus Fusarium (Fusarium oxysporum f.sp.radicis-lycopersici) and after 5 days, the tissues of the seedlings were inspected for the growth of hyphae of this fungus.

The tissues cultivated in Examples 9 to 12 and Comparative Example 6 were inspected for the growth conditions of hyphae of the foregoing fungus and evaluated on the basis of the evaluation criteria detailed in the following Table 8.

[Table 8]

**Table 8**

| Judgment | Evaluation Criteria |
|---|---|
| - | The hyphae of the fungus normally grow. |
| ± | The growth of hyphae thereof is slightly controlled. |
| + | The growth of hyphae thereof is controlled and the growth-inhibited portions on the plant are clearly distinguished. |

[Table 9]

**Table 9: Results of Fusarium Hyphae-Growth Examined Above**

| | Inhibition of Hyphae-Growth |
|---|---|
| Example 9 | + |
| Example 10 | ± |
| Example 11 | ± |
| Example 12 | ± |
| Comparative Example 6 | - |

(Results)

It has been clear that the growth of the hyphae of Fusarium on or within the plant bodies examined can be controlled by the application of the yeast cell wall- decomposition products, the baker's yeast cell wall-decomposition products, and the marine yeast cell wall-decomposition products.

Brief Description of the Drawings

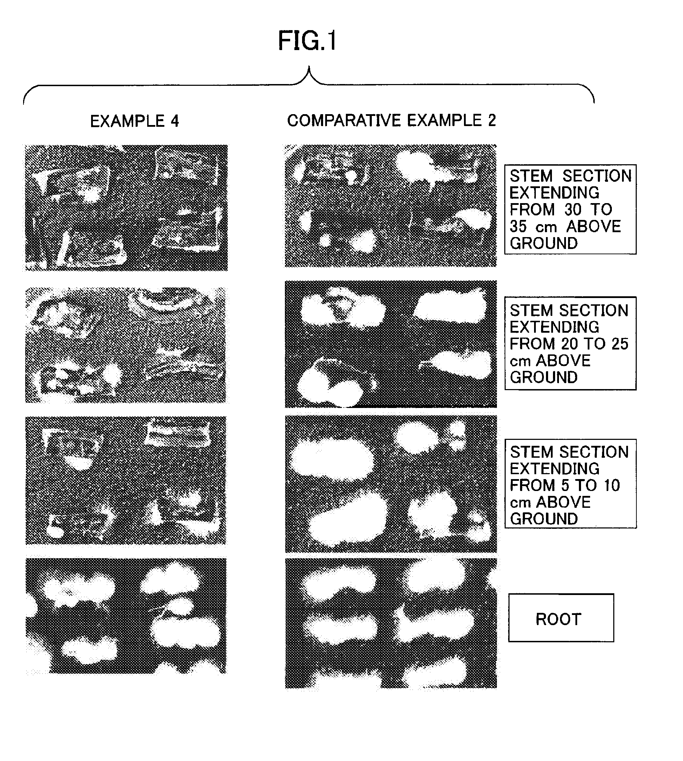

[Figure 1] Fig. 1 is a photograph illustrating the results observed when cultivating various sections of tomato seedlings on the KOMADA culture medium.
[Figure 2] Fig. 2 shows the results obtained in the inspection of the tomato seedlings for the rate of outbreak of powdery mildew.

**Claims**

1. A plant's disease resistance-improving agent comprising yeast cell wall decomposition products.

2. The plant's disease resistance-improving agent of claim 1, wherein it comprises 0.00001 to 30% by mass of the yeast cell wall decomposition products as expressed in terms of the dried mass of the decomposition products.

3. The plant's disease resistance-improving agent of claim 1, wherein it comprises, as an effective component, the yeast cell wall decomposition products.

4. The plant's disease resistance-improving agent of any one of claims 1 to 3, wherein it further comprises an agent for imparting disease-resistant characteristics to a plant.

5. A specified protection material used for imparting disease-resistant characteristics to a plant comprising yeast cell wall-decomposition products.

6. Use of yeast cell wall-decomposition products for the improvement of the disease-resistant characteristics of a plant.

7. A method for enhancing the effect of a plant's activator to improve plant's disease-resistant characteristics wherein yeast cell wall-decomposition products are incorporated into the plant's activator.

8. A method for cultivating a plant comprising the step of applying the plant's disease resistance-improving agent of any one of claims 1 to 4 or the specified protection material of claim 5 to the young seedlings and/or the seedlings after the seedlings were planted.

# FIG.1

EXAMPLE 4          COMPARATIVE EXAMPLE 2

STEM SECTION EXTENDING FROM 30 TO 35 cm ABOVE GROUND

STEM SECTION EXTENDING FROM 20 TO 25 cm ABOVE GROUND

STEM SECTION EXTENDING FROM 5 TO 10 cm ABOVE GROUND

ROOT

# FIG.2

<table>
<tr><td colspan="2">**INTERNATIONAL SEARCH REPORT**</td><td>International application No.<br>PCT/JP2005/020196</td></tr>
</table>

A. CLASSIFICATION OF SUBJECT MATTER
*A01N63/00*(2006.01), *A01G7/00*(2006.01)

According to International Patent Classification (IPC) or to both national classification and IPC

B. FIELDS SEARCHED

Minimum documentation searched (classification system followed by classification symbols)
*A01N63/00*(2006.01), *A01G7/00*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 52-76424 A (KANEKA Corp.),<br>27 June, 1977 (27.06.77),<br>Full text<br>(Family: none) | 1-8 |
| X | JP 53-41423 A (KANEKA Corp.),<br>14 April, 1978 (14.04.78),<br>Full text<br>(Family: none) | 1-8 |
| X | JP 10-510246 A (The Regents of the University<br>of Colorado),<br>06 October, 1998 (06.10.98),<br>Claim 26; pages 17, 40<br>& WO 96/14876 A1 & AU 9642835 A<br>& EP 789593 A1 & US 5830463 A | 1-8 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>15 December, 2005 (15.12.05) | Date of mailing of the international search report<br>27 December, 2005 (27.12.05) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/020196

C (Continuation).   DOCUMENTS CONSIDERED TO BE RELEVANT

| Category* | Citation of document, with indication, where appropriate, of the relevant passages | Relevant to claim No. |
|---|---|---|
| X | JP 63-45211 A  (Sanyo-Kokusaku Pulp Co., Ltd.),<br>26 February, 1988 (26.02.88),<br>Full text<br>(Family: none) | 1-8 |
| X | JP 9-249473 A  (Aquatech Co., Ltd.),<br>22 September, 1997 (22.09.97),<br>Full text<br>(Family: none) | 1-8 |
| X | JP 10-324609 A  (Shiseido Co., Ltd.),<br>08 December, 1998 (08.12.98),<br>Full text<br>(Family: none) | 1-8 |

Form PCT/ISA/210 (continuation of second sheet) (April 2005)

**EP 1 815 742 A1**

## REFERENCES CITED IN THE DESCRIPTION

### Patent documents cited in the description

*   JP 2003095821 A
*   JP 2000095609 A